# EUROPÄISCHE PATENTSCHRIFT

(11) **EP 3 627 472 B1**
(45) Veröffentlichungstag und Bekanntmachung des Hinweises auf die Patenterteilung: **12.03.2025**
(21) Anmeldenummer: 18195435.5
(22) Anmeldetag: 19.09.2018
(51) Int. Cl.: G08G 1/01, G08G 1/08, G08G 1/083, H04W 64/00

(54) **VERFAHREN UND ANORDNUNG ZUR AUTOMATISIERTEN LOKALEN STEUERUNG VON MULTI-MODALEN STÄDTISCHEN VERKEHRSFLÜSSEN**
METHOD AND SYSTEM FOR AUTOMATED LOCAL CONTROL OF MULTI-MODAL URBAN TRAFFIC FLOWS
PROCÉDÉ ET DISPOSITIF DE COMMANDE LOCALE AUTOMATISÉE DES FLUX DE TRANSPORT URBAIN MULTIMODALES

(43) Veröffentlichungstag der Anmeldung: 25.03.2020
(73) Patentinhaber: Deutsche Telekom AG, 53113 Bonn (DE)
(72) Erfinder: LEHMANN, Heiko, 12587 Berlin (DE); CASOTT, Norbert, 50969 Köln (DE)
(74) Vertreter: Vossius & Partner Patentanwälte Rechtsanwälte mbB

(56) Entgegenhaltungen:
- EP-A1- 3 054 721
- WO-A1-2018/141403
- DE-A1- 10 110 434
- US-A1- 2003 014 180
- US-A1- 2017 352 264

## Beschreibung

Die vorliegende Erfindung bezieht sich allgemein auf das Gebiet der Telekommunikation und im speziellen auf eine innerstädtische Verkehrsflusssteuerung. Die Erfindung betrifft dabei ein Verfahren und Anordnung zur automatisierten lokalen Steuerung von multi-modalen städtischen Verkehrsflüssen, das bzw. die es gestattet, auf lokal detektierte Verkehrsflussmuster durch geeignete Berechnungsverfahren, die vorzugsweise innerhalb eines Telekommunikationsnetzes (TK-Netz) durchgeführt werden, zu reagieren.

So können einerseits lokale Verkehrsregulierungseinrichtungen, z.B. Lichtsignalanlagen (LSA) in kurzer Zeit adaptiert werden, um den lokalen Verkehrsdurchfluss zu optimieren, und andererseits die übergreifende Verkehrsflussteuerung in einem nicht-lokalen Bezugsgebiet ebenfalls angepasst werden, um den nicht-lokalen Verkehrsdurchfluss zu optimieren.

Der Verkehrsfluss von Fahrzeugen im Straßennetz einer Stadt, d.h. von motorisiertem Individualverkehr und öffentlicher Personennahverkehr (ÖPNV), aber auch die Bewegungsströme von anderen Verkehrsteilnehmern, wie Fußgängern und Radfahrern, werden an kritischen Knoten (Kreuzungen) durch Lichtsignalanlagen gesteuert. Ziel der Steuerung ist eine Optimierung des Verkehrsablaufs, um die Reisezeiten für alle Verkehrsteilnehmer unter Berücksichtigung von Verkehrssicherheit und Umweltverträglichkeit, zu minimieren.

Bisher erfolgt eine Dimensionierung von LSA und von Transportkapazitäten von Verkehrswegen in städtischen Transportwegesystemen auf Basis statistisch validierter Zähldaten. Hierbei werden die verschiedenen Verkehrsmodi berücksichtigt. Als Verkehrsmodi werden in der nachfolgenden Beschreibung verschiedene Verkehrsteilnehmer unterschieden, d.h. Fußgänger, Radfahrer, motorisierter Individualverkehr, ÖPNV, motorisierte Flottenverkehre, usw..

Unter Annahme typischer Tagesgänge werden auf Basis dieser statischen Zähldaten beispielsweise zeitliche Muster für eine Durchflusssteuerung einer LSA ermittelt und in Abhängigkeit von der Tageszeit und/oder saisonalen Zeiten in einer Steuerungseinrichtung implementiert.

Eine weitere Verfeinerungsstufe der Verkehrsflusssteuerung sind adaptive LSA, die auf Basis von Sensordaten, z.B. von Zählschleifendaten, eine adaptive Veränderung der Durchflusssteuerung vornehmen können.

Die Parameter des Signalprogramms einer LSA, über die der Verkehrsfluss gesteuert werden kann, sind die Umlaufzeit, Freigabezeit (Phasendauer), Phasenanzahl, Phasenablauf und die Versatzzeit. Die Steuerungsverfahren für LSA unterscheiden sich in der Art, wie die Steuerung der Verkehrsströme realisiert wird und im Grad der Beeinflussbarkeit oder Veränderbarkeit der Signalprogrammelemente.

Welches Steuerungsverfahren gewählt werden soll, ist in erster Linie nach vorzugebenden Zielen zu entscheiden, so ist beispielsweise eine Netzoptimierung, eine Linienoptimierung oder eine lokale Knotenoptimierung möglich.

Die Steuerungsverfahren werden nach [2] grundsätzlich wie folgt klassifiziert (aus [7] entnommen):
1. Festzeitsteuerung; Alle Knotenpunkte haben eine einheitliche feste Umlaufzeit. Alle Signalgruppen folgen einem festen Zeitplan. Die Auswahl des jeweiligen Zeitplans kann Uhrzeit-gesteuert erfolgen oder auf der Basis einer Logik, die sich auf die Erfassung von Verkehrsdaten mittels Detektoren stützt.
2. Logikbasierte bzw. regelbasierte Steuerung; Eine solche Steuerung verwendet meistens als Basis einen Rahmenplan, der einer Festzeitsteuerung entspricht. Dieser Rahmenplan wird jedoch an den einzelnen Knotenpunkten durch Modifikationen der Freigabezeiten überlagert. Diese ergeben sich aus Informationen über die momentane Verkehrslage am Knoten. Dazu gehören auch bevorzugte Freigaben für ÖPNV-Fahrzeuge.
3. Modellbasierte Steuerung; Eine solche Steuerung erzeugt den Signalzeitenplan mit Hilfe eines mathematischen Optimierungsmodells aus der Erfassung der gesamten Verkehrssituation in dem gesteuerten Straßennetz. Bestandteile des Systems sind: Ein System zur Erfassung der Verkehrssituation, ein mathematisches Modell zur Vorhersage der Auswirkungen (z. B. Zeitverluste, Anzahl von Halten, Umweltwirkungen) eines Signalzeitenplans und ein Optimierungsverfahren zur Minimierung der Nachteile der Signalsteuerung.

In der Vergangenheit wurden vorwiegend traditionelle festzeitgesteuerte "Grüne Wellen" und die darauf aufbauenden koordinierten verkehrsabhängigen Steuerungen eingesetzt, um einen gleichmäßigeren Verkehrsfluss zu erreichen. Als Weiterentwicklung dieser Steuerungsarten sind zunächst im Ausland vollverkehrsabhängige netzweite Steuerungen in einer Form entstanden, wie es sie in Deutschland bislang nicht gab, wie beispielsweise SCOOT in England bzw. SCATS in Australien.

Dabei wird die Optimierung im laufenden Betrieb auf der Basis von Detektorzählungen vorgenommen. In Deutschland wurden so genannte adaptive Systeme wie beispielsweise MOTION und BALANCE entwickelt. Beide werden heute in Deutschland im Markt angeboten. MOTION wird von der Fa. Siemens im Rahmen des Produktes Sietraffic und BALANCE wird von den Firmen GEVAS Software GmbH und TRANSVER GmbH vertrieben.

Hierbei handelt es sich jeweils um modellbasierte Steuerungssysteme, die im laufenden Betrieb eine an die aktuelle Verkehrssituation angepasste Steuerung berechnen.

Die Systeme konzentrieren sich auf eine Verflüssigung des Verkehrsaufkommens in örtlich begrenzten Teilnetzen und lassen somit die Optimierung des Gesamtnetzes im ersten Schritt außer Acht. Über Schnittstellen zwischen den Teilnetzen ist eine Optimierung des Gesamtnetzes möglich. Eine detaillierte Beschreibung der vier genannten Steuerungsverfahren kann [1], [3] bzw. [8] entnommen werden.

Die oben beschriebenen Verfahren zeichnen sich dadurch aus, dass sie auf zwei Ebenen agieren. Einer zentral gesteuerten taktischen oder makroskopischen Ebene zur Linien- oder (Teil-)Netzoptimierung und einer dezentral gesteuerten lokalen bzw. mikroskopischen Ebene, also auf der Steuerung einzelner Knoten, z.B. zwecks ÖPNV Vorrangschaltung. Es handelt sich dabei also um eine Mischung von zentraler und dezentraler Steuerung.

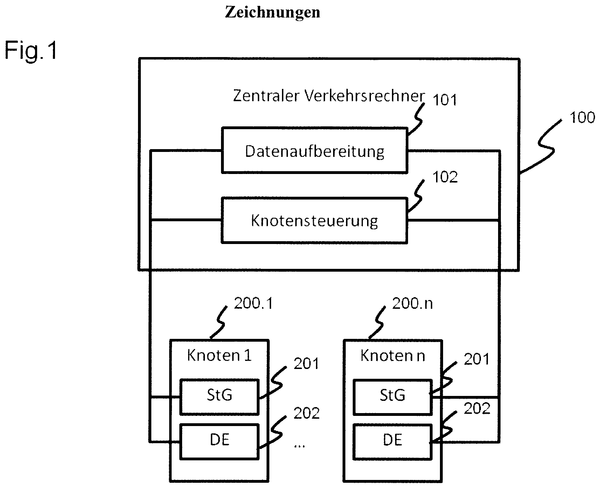

Fig. 1 zeigt schematisch die Architektur, die für die oben beschriebenen Steuerungsverfahren derzeit zum Einsatz kommt. In den lokalen Knoten 200.n ist neben einer Datenerfassung 202 mittels klassischer Sensoren ein Steuergerät 201 installiert. Die Systeme des lokalen Knotens sind datentechnisch an den zentralen Verkehrsrechner 100 angebunden. Der Verkehrsrechner 100 kann so die Signalprogramme an die Konten übermitteln und erhält lokal erfasste Verkehrsflussdaten. Diese Daten werden in einem Modul 101 aufbereitet, um basierend auf Verkehrsmodellen Signalprogramme über ein Knotensteuerungsmodul 102 zu erstellen bzw. anzupassen. Die Ausstattung in den lokalen Knoten kann sich je nach anzuwendendem Verfahren wie oben beschrieben unterscheiden. Es gibt mitunter Knoten, die über keinerlei Datenerfassung verfügen und in denen das Steuergerät ohne jegliche Intelligenz ausgestattet lediglich Schaltbefehle nach einem festen, durch den Verkehrsrechner vorgegebenem, Plan ausführen.

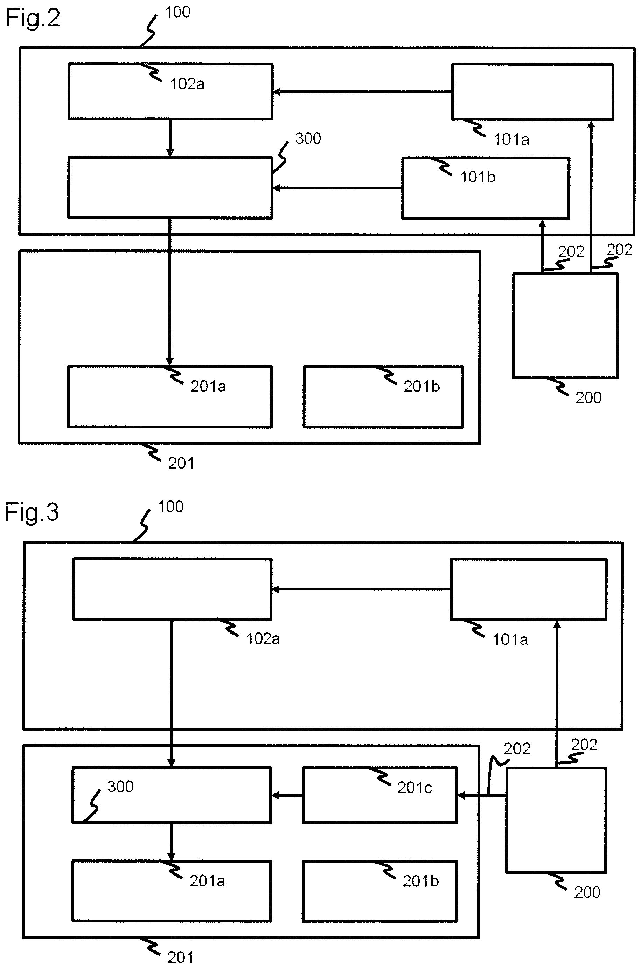

Mit Verweis auf Figuren 2 bis 4 können die verschiedenen Steuerungsarten wie folgt beschrieben werden:
Bei der zentralen Steuerung, vgl. Fig. 2, werden Signalprogramme von einem Verkehrsrechner 100 abgearbeitet. Dieser stellt nach Aufbereitung 101a und 101b der zur Verfügung stehenden Verkehrsdaten 202 jedem angeschlossenen Steuergerät 201 der einzelnen Verkehrsknoten 200 die für die Signalisierung notwendigen Freigabe- und Sperrzeitinformationen 300 zur Verfügung. Grundlage für die Signalprogrammerstellung sind, neben den aktuelle erfassten Flussdaten, die zugrundeliegenden Verkehrsmodelle der jeweiligen Verfahren, die eine aufwändige Modellierung des Verkehrsnetzes voraussetzen.

Im Detail werden die erfassten Daten 202 einer Datenaufbereitung für den Knotenpunkt 101b und einer Datenaufbereitung der Linie/ Netz 101a übermittelt. Anschließend erfolgt zunächst eine Netz-/Liniensteuerung 102a und dann die Bestimmung eines Signalprogramms 300 und/oder direkt die Bestimmung des Signalprogramm 300. Das Signalprogramm 300 wird vom Verkehrsrechner 100 an eine entsprechende Signalgruppe 201a im Steuergerät 201 am Knoten 200 übermittelt. Ergänzend verfügt das Steuergerät 201 über eine Signalsicherung 201b als Backup.

Bei der dezentralen Steuerung, vgl. Fig. 3, liegen die Signalprogramme 300 direkt im Steuergerät 201 des Knotens 200 vor und werden unter Berücksichtigung der aktuellen Messdaten 202 abgearbeitet. Die Zentrale 100 versorgt die lokalen Steuergeräte 201 mit den Signalprogrammen 300 und sorgt im Bedarfsfall für eine Synchronisierung verschiedenen Knoten 200.

Im Detail werden die erfassten Daten an die Datenaufbereitung für die Linie/Netz 101a des Verkehrsrechners 100 übermittelt und/oder an die Datenaufbereitung für den Knotenpunkt 201c des Steuergeräts 201 übermittelt. Im Verkehrsrechner 100 erfolgt die Netz-/Liniensteuerung 102a. Im Steuergerät erfolgt die Bestimmung des Signalprogramms 300 und die Übermittlung an die Signalgruppen 201a. Ergänzend verfügt das Steuergerät 201 über eine Signalsicherung 201b als Backup.

Derartige dezentrale Ansätze, die die nahezu vollständige Verlagerung der Intelligenz in die Steuergeräte der Knoten vorsieht, haben den Nachteil, dass jedes einzelne Steuergerät in allen relevanten Knotenpunkten entsprechend technisch ausgerüstet werden muss und insbesondere der Anpassungsaufwand, d.h. beispielsweise die Kosten für Updates, im Falle eines Änderungsbedarfes erheblich sein kann. Die Vergangenheit hat gezeigt, dass aufgrund der sich ständig verändernden Nachfrage, d.h. der Verkehrslast, Anpassungen in regelmäßigen Abständen zu erwarten sind.

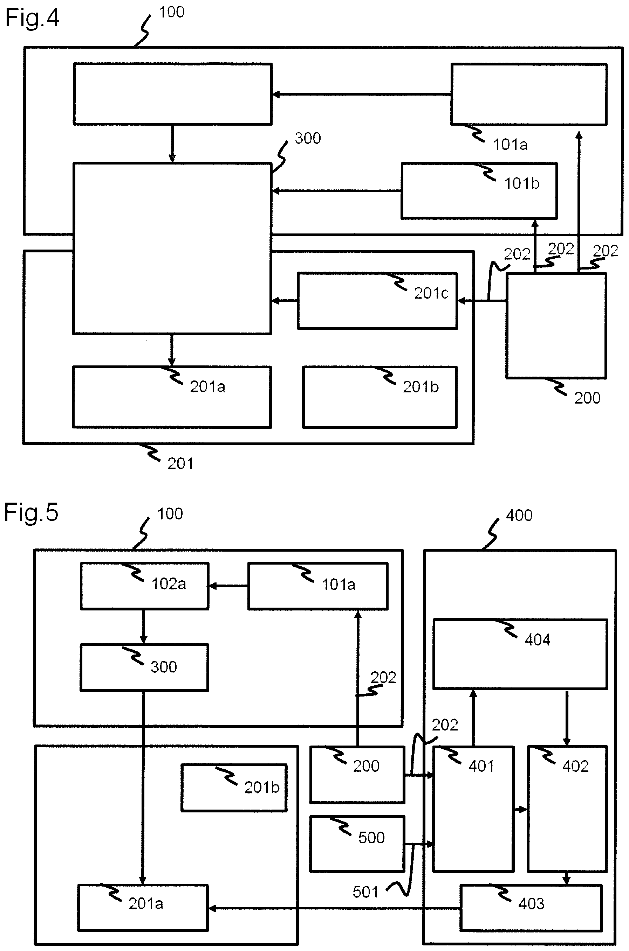

Mitunter wird die zentrale Steuerung auch mit der dezentralen Steuerung kombiniert zu teilzentralen Steuerung, vgl. Fig.4, in der einzelne Steuerfunktionen zwischen Zentrale 100 und Steuergerät 201 aufgeteilt sind. Im lokalen Steuergerät 201 werden knotenbezogene Aktionen in Abhängigkeit von der aktuellen Verkehrslage ausgeführt. Linien oder Netzbezogene, also knotenpunktübergreifende Aktionen werden weiterhin von der Zentrale gesteuert 100.

Im Detail, verfügt eine teilzentrale Steuerung über eine Datenaufbereitung für den Knotenpunkt 101b bzw. 201c sowohl im Verkehrsrechner 100 als auch im Steuergerät 201. Auch können die Signalprogramme 300 sowohl im Verkehrsrechner 100 als auch im Steuergerät 201 bestimmt werden. Die anderen Elemente entsprechen den jeweiligen Elementen der Figuren 2 und 3.

Die lokalen Steuergeräte, die die Signale schalten, kommen in unterschiedlichen Qualitäten zum Einsatz. Es kann hier wie folgt unterschieden werden [7]: Grundsätzlich müssen die Geräte bei verkehrsabhängiger Steuerung eine Schnittstelle zur Übernahme der Signalparameter bereitstellen und entsprechend die Signale steuern können.

Reine Schaltgeräte führen lediglich die von der Zentrale übermittelten Schaltzyklen aus, Steuergeräte sind darüber hinaus in der Lage Signalschaltprogramme eigenständig auszuführen. Ein Gruppensteuergerät kann mehrere Kontensteuergeräte koordinieren.

Bei Störungen der Kommunikation zwischen der Zentrale und dem Steuergerät greift die Signalsicherung mit einem entsprechenden Notprogramm ein.

Es wird klar, dass ein einmal ausgestatter Knoten, nur mit erheblichen Kosten auf eine andere Steuerungslogik umgerüstet werden kann.

Bei den bisher beschriebenen Systemen erfolgte die Erfassung der Verkehrsflussdaten durch klassische Sensorik. Dies sind insbesondere Induktionsschleifen und Kameradaten. Darüber hinaus wurden GPS Probes, also Bewegungsdaten von mit GPS ausgestatteten Fahrzeugen (Floating Car Data, FCD), in einzelnen Forschungsprojekten als zusätzliche Datenquelle erprobt.

Diese wurden jedoch nicht in signifikanten Mengen erprobt und finden aktuell keinen Eingang in die Steuerungssysteme. Eine Übersicht über mögliche Erfassungsmethoden ist Abbildung 2-5 auf Seite 15 in [7] zu entnehmen.

Jedes Steuerungsverfahren stellt aufgrund der unterschiedlichen Modellbildungen andere Anforderungen an die Lage (Installationsort) der Erfassungspunkte, was einen einfachen Wechsel von einem zu einem anderen System erheblich erschwert.

Die bisher beschriebenen Systeme aus dem Stand der Technik werden den aktuellen Verkehrssituation jedoch nicht mehr gerecht. Es ist wichtig zu berücksichtigen, dass sich die klassische Verkehrsträgereinteilung durch die Elektrifizierung von Antriebstechniken spürbar verändert - So erreichen beispielsweise Elektrofahrräder einerseits wesentlich höhere Geschwindigkeiten sind aber andererseits nicht zwingend spurgebunden. Ferner stellen Pedelecs und Lastenfahrräder gänzlich neue Verkehrsmodi dar. Folglich sind die klassischen Modelle und Steuerungsparadigmen auf diese strukturellen Veränderungen hin abzuändern.

Ferner muss die Verkehrsdatenerhebung angepasst werden. Die klassische Induktionsschleifenzählung verliert an Relevanz, da so nur bewegte elektrische Leiter hinreichender Dimension auf einem vorgegebenen und eng limitierten Weg erfasst werden.

EP 2345020 A2 betrifft eine Verkehrssteuerung zur Beeinflussung eines Verkehrsflusses innerhalb eines beschränkten Straßen- bzw. Verkehrsnetzes mit Kreuzungen, z.B. von einer Großstadt, mit einer der Kreuzungs-Anzahl N entsprechenden Anzahl von Lichtern den Steuerungsablauf aktuell bestimmende Signalpläne an einen Verkehrsrechner weitergeleitet werden. Detektoren sind im Zusammenhang mit den Lichtsignalanlagen LSA vorgesehen, durch die Verkehrsdaten erfasst und an den Verkehrsrechner weitergeleitet werden können.

US 2012065872 A1 betrifft die Berechnung von Echtzeit-Verkehrsbedingungen auf Basis von Daten, die über ein Netzwerk übertragen werden, das von Mobiltelefonen innerhalb mehrerer Automobile genutzt wird, einschließlich, aber nicht beschränkt auf die Zeit, die benötigt wird, um eine bestimmte Strecke auf einer bestimmten Strecke zurückzulegen.

US 2017270413 A1 betrifft ein System zum Filtern von Daten für eine Verkehrssteuerungszentrale, umfassend: eine Vielzahl von Datenquellen; eine oder mehrere Netzwerkrechnereinrichtungen, die konfiguriert sind, um Daten aus der Vielzahl von Datenquellen zu verarbeiten, um Ursachen vorherzusagen, die mit vorhergesagten Verkehrsereignissen verbunden sind, und um Daten aus der Vielzahl von Datenquellen auszuwählen, die auf der Grundlage der vorhergesagten Ursachen an die Verkehrssteuerungszentrale ausgegeben werden sollen.

US 2017/352264 A1 betrifft ein Verkehrskontrollgerät für die Kontrolle mehrerer Vorfahrtsdurchfahrten an einer Verkehrskreuzung. Das Verkehrskontrollgerät enthält eine mobile drahtlose Schnittstelle zur Kommunikation mit einem fahrzeugeigenen mobilen drahtlosen Gerät, um ein Pendlerprofil zu empfangen, das ein abonniertes Schaltzeitintervall enthält.

WO 2018/141403 A1 betrifft ein Verfahren und eine Vorrichtung zur Erfassung von Verkehrsflüssen in einem Verkehrsnetz mit einem oder mehreren Knoten, wobei in einer knotennahen Berechnungseinrichtung Verkehrsdaten erfasst und angepasste Verkehrssignalprofile ausgewählt werden.

Die hier vorliegende Erfindung betrifft insbesondere die den Steuerungsverfahren zugrundeliegende Datenerfassung, die verwendeten Datenquellen und die Systemarchitektur des Steuerungssystems.

Die vorangehend beschriebenen Probleme und andere Aufgaben werden durch den Gegenstand der beigefügten unabhängigen Patentansprüche gelöst. Die abhängigen Patentansprüche beziehen sich auf weitere Aspekte der Erfindung.

Die vorliegende Erfindung beschreibt ein Verfahren mit dem es möglich sein wird, sehr kurzfristig auf Änderungen im Verkehrsfluss aller Verkehrsteilnehmer, also insbesondere auch bislang wenig berücksichtigter Teilnehmergruppen, wie Fußgänger und Radfahrer, zu reagieren, um über die Anpassung der Schaltfolgen der Lichtsignalanlagen (LSA) den Verkehrsfluss selbst den aktuellen Verhältnissen anzupassen und insbesondere kritische Situationen zu vermeiden.

Ein Aspekt der vorliegenden Erfindung betrifft die schnelle und adaptive Reaktionsfähigkeit eines städtischen Verkehrsflusssteuerungssystems auf Veränderungen in den tatsächlichen Verkehrsflüssen, hier insbesondere unter Einbeziehung aller Verkehrsmodi. Unvorhergesehene Störungen, wie etwa ein Wasserrohrbruch auf einer Hauptverkehrsader oder ein Unfall, werden durch schnelle Adaption lokaler LSA quasi reflexhaft beantwortet.

Ein weiterer Aspekt betrifft eine übergreifende Analytik für das betrachtete Verkehrsgebiet. Die organische Verknüpfung von Verkehrsdatenerhebung, automatisierter Verkehrsmustererkennung und Steuerungsalgorithmik über Funktionalitäten der 5G-TK-Netze stellt eine wesentliche Verbesserung dar.

Mit der Ubiquität von Smartphones und den immer genauer werdenden Positionierungsmöglichkeiten dieser Geräte steht eine Datenquelle zur Verfügung, die agnostisch gegenüber dem Verkehrsträger ist, d.h. Fußgänger, Radfahrer, Autofahrer und ÖPNV-Nutzer werden gleichberechtigt erfasst. In dieser Beschreibung werden explizit Smartphones diskutiert, tatsächlich dient dieser Begriff lediglich der Veranschaulichung und stellt keine Einschränkung des Erfindungsgegenstands dar. Vielmehr ist unter diesem Begriff ein jedes Gerät zusammengefasst, welches über eine Anbindung an ein Mobilfunknetz, vorzugsweise über eine SIM-Card verfügt, und Positions- bzw. Bewegungsdaten übermitteln kann.

Die derzeit in Entwicklung befindlichen Telekommunikationsnetze der fünften Generation (5G) bieten neben verkürzten Latenzzeiten und höheren Datendurchsatzraten zum ersten Mal dezentralisierte Berechnungsfunktionen in der sogenannten Edge Cloud und die Option eines virtualisierten Netzbetriebs.

Erfindungsgemäß wird diese Steuerungstopologie für taktiles innerstädtisches Verkehrsflussmanagement genutzt. Anstatt Daten über latenzbehaftete Wege zu einem zentralen Datenverarbeitungszentrum zu transportieren und dort in global ausgerichteten Algorithmen zu verarbeiten, kann die erfindungsgemäße Steuerungsanwendung verteilt werden; geeignete Module können in dezentral gelegenen Berechnungseinheiten mit kurzer Rückantwort an die Kontrolleinheit (hier: LSA) ausgeführt werden. Ferner bietet 5G die Option von network slicing. Hierbei können separate virtuelle TK-Netze konfiguriert werden, die es erfindungsgemäß ermöglichen, mehrere mit einem Kommunikationsmodul, z.B. einer SIM Card, ausgestatteten LSA in einem regional oder hoheitlich definierten Gebiet zusammenzufassen und so einer verteilten Steuerungsalgorithmik zugänglich zu machen.

Als erfindungsgemäß wird beansprucht ein Verfahren zur Erfassung von Verkehrsflüssen in einem Verkehrsnetz nach Anspruch 1.

In einem Aspekt der Erfindung werden in dem Erfassungsschritt Positions- und/oder Bewegungsdaten von Mobilfunkendgeräten in dem Telekommunikationsnetz erfasst und/oder in der knotennahen Berechnungseinrichtung des Telekommunikationsnetzwerks erfasst und verarbeitet.

Erfindungsgemäß wird in dem Erfassungsschritt, basierend auf der geographischen Position des Knotens, mindestens ein virtueller Messpunkt bereitgestellt, der einem konventionellen Erfassungssystem entspricht.

In einem Aspekt der Erfindung wird in dem Verkehrsflussbestimmungsschritt, basierend auf Machine Learning (ML) Techniken, ein Modal Split bestimmt, bei dem die erfasste Position und/oder vorzugsweise einer Trajektorie einem bestimmten Typ von Verkehrsteilnehmern zugeordnet wird; und wobei in dem Verkehrsflusserfassungsschritt der Verkehrsfluss basierend auf dem Modal Split bestimmt wird.

Erfindungsgemäß werden zur Steuerung von Verkehrsflüssen in einem Verkehrsnetz, weist das Verkehrsnetz Knoten, Linien und/oder Teilnetze auf, wobei in einem lokalen Steuerungsschritt ein lokaler Steuerungsalgorithmus ausgeführt wird und eine Signalanpassung für mindestens eine Verkehrslenkungseinrichtung an mindestens einem Knoten, einer Linie und/oder einem Teilnetz des Verkehrsnetzes auf Basis eines Verkehrsfluss an dem Knoten, der Linie und/oder dem Teilnetz, der nach einem der voranstehenden Aspekte erfasst wurde, ermittelt wird; und wobei der lokale Steuerungsschritt in einer knotennahen Berechnungseinrichtung des Telekommunikationsnetzes durchgeführt wird, und zwar in der gleichen knotennahen Berechnungseinrichtung in der auch die Erfassung durchgeführt wird.

Erfindungsgemäß ist der virtuelle Messpunkt konfiguriert, Eingangsparameter für den lokalen Steueralgorithmus bereitzustellen, die Eingangsparametern des konventionellen Erfassungssystems entsprechen.

In einem Aspekt der Erfindung ist die knotennahe Berechnungseinrichtung eine Edge Computing Einrichtung des Telekommunikationsnetzwerks, vorzugsweise eine 5G Edge Unit des Telekommunikationsnetzwerks ist und/oder wobei die Schritte des Verfahrens in einer network slice des Telekommunikationsnetzwerks durchgeführt werden.

In einem Aspekt der Erfindung betrifft die Signalanpassung mindestens einen der folgenden Parameter: Umlaufzeit, Freigabezeit, Phasenanzahl, Phasenablauf und die Versatzzeit.

In einem Aspekt der Erfindung führt der lokale Steuerungsalgorithmus mindestens eine der folgenden Optimierungen aus: Netzoptimierung, Linienoptimierung oder lokale Knotenoptimierung.

In einem Aspekt der Erfindung wird in dem Verfahren in mindestens einer zentralen Steuerungseinrichtung ein zentraler Steuerungsschritt durchgeführt, in dem mehrere Signalanpassungen aus mehreren lokalen Steuerungsschritten miteinander koordiniert werden. In einem Aspekt der Erfindung wird ein dezentraler Steuerungsschritt durchgeführt, in dem mehrere Signalanpassungen aus mehreren lokalen Steuerungsschritten miteinander koordiniert werden.

Ferner wird als erfindungsgemäß beansprucht eine Berechnungseinrichtung eines Telekommunikationsnetzes nach Anspruch 9, die konfiguriert ist, das Verfahren nach einem der obenstehenden Aspekte durchzuführen.

Ferner wird als erfindungsgemäß beansprucht ein System nach Anspruch 10 aus mindestens einer Berechnungseinrichtung wie voranstehend beschrieben und mindestens einer zentralen Steuerungseinrichtung, welche konfiguriert ist das Verfahren nach einem der obenstehenden Aspekte durchzuführen.

Ferner wird als erfindungsgemäß beansprucht ein Mobilfunkendgerät nach Anspruch 11, das konfiguriert ist, seine Positions- und/oder Bewegungsdaten einer voranstehend beschriebenen Berechnungseinrichtung zu übermitteln und an dem Verfahren nach einem obenstehenden Aspekte teilzunehmen.

Ferner wird als erfindungsgemäß beansprucht ein Computerprogrammprodukt nach Anspruch 12, welches mindestens eines der folgenden, eine voranstehend beschriebene Berechnungseinrichtung, ein voranstehend beschriebenes System, oder ein voranstehend beschriebenes Mobilfunkendgerät veranlasst, die Schritte des Verfahrens nach einem der obenstehenden Aspekte durchzuführen.

### Kurze Beschreibung der Figuren

In den Figuren zeigen:
- Fig. 1: Eine Prinzipskizze einer Steuerungsarchitektur nach dem Stand der Technik,
- Fig. 2: Eine Prinzipskizze einer zentralen Steuerung nach dem Stand der Technik,
- Fig. 3: Eine Prinzipskizze einer dezentralen Steuerung nach dem Stand der Technik,
- Fig. 4: Eine Prinzipskizze einer teilzentralen Steuerung nach dem Stand der Technik,
- Fig. 5: Prinzipskizze einer 5G-Edge-basierten Knoten- bzw. Teilnetzsteuerung in einer Ausführungsform der Erfindung,
- Fig. 6: Steuerungsmodell innerhalb eines Teilnetzes einer Edge in einer Ausführungsform der Erfindung,
- Fig. 7: Verteilung der Module in einem Verarbeitungsprozess der LSA Steuerung in einer Ausführungsform der Erfindung, und
- Fig. 8: Eine Prinzipskizze einer Steuerungsarchitektur in einer Ausführungsform der Erfindung.

### Beschreibung der Figuren

Die vorliegende Erfindung betrifft eine Erfassungsmethode mit der, ein wesentlich präziseres Abbild der aktuellen Verkehrsflüsse bei gleichzeitiger Ausweitung auf alle am Verkehr beteiligten Modalitäten erstellt werden kann. Somit stellt die erfindungsgemäße Erfassung eine Grundlage für neue Steuerungsverfahren mit entsprechender präziserer Modellbildung dar.

Es ist ein Aspekt der vorliegenden Erfindung die vorhandene Steuerungsverfahren in optimierter Weise auf die Berechnungs- und Kommunikationsarchitektur zukünftiger Telekommunikationsnetze abzubilden und so in ihrer Wirksamkeit erheblich zu verbessern.

Grundlage für die Verkehrssteuerung bzw. die darauf abgestimmte Steuerung der LSA für den hier betrachteten Fall der adaptiven Steuerung, ist die Erfassung der Verkehrsflüsse in den lokalen Knoten. Erfindungsgemäß erfolgt die Erfassung basierend auf Positionsbestimmungen von Mobilfunkendgeräten innerhalb eines Mobilfunknetzes. Anhand einer, vorzugsweise kontinuierlichen Positionsbestimmungen lassen sich die Verkehrsflüsse nicht nur punktuell, sondern bei Bedarf auch als Trajektorien erfassen.

Erfindungsgemäß werden, um den bestehenden Steuerungsmodellen Rechnung zu tragen, virtuelle Messpunkte, analog Messpunkten aus dem Stand der Technik, beispielsweise zu fest installierten Schleifen, definiert, um kompatible Eingangsgrößen bereitstellen zu können.

In einer Ausführungsform der Erfindung werden alternativ oder ergänzend weitere virtuelle Messstellen definiert.

In einer Ausführungsform der Erfindung wird mittels ML Techniken aus den beobachteten Daten ein Modalsplit bestimmt, um die verschiedenen Verkehrsteilnehmer, d.h. Auto, Fahrrad, ÖPNV, Fußgänger, etc., zu identifizieren.

Erfindungsgemäß erfolgt die Verarbeitung der Positionsdaten knotenpunktnah in Berechnungseinrichtung des Telekommunikationsnetzes, vorzugsweise in Edge-Computingeinrichtungen, speziell in 5G Edges, anstatt in den Knotenpunkten bzw. in den Kontenpunkten zugeordneten Steuergeräten.

Im Nachfolgenden werden die Begriffe Berechnungseinrichtungen des Telekommunikationsnetzes, Edge-Computing Einrichtung, 5G Edge und Edge synonym verwendet. Eine 5G Edge ist eine dezentrale Rechenkapazität im Mobilfunktnetz (Edge Compute). In einer Edge werden, abhängig von der Topologie des Mobilfunknetzes und der damit einhergehenden "Reichweite" bzw. der räumlichen Abdeckung der Edge, mehrere Knoten bis hin zu Teilnetzen gesteuert.

Erfindungsgemäß werden die bestehenden Steuerungsalgorithmen, je nach Steuerungsebene, d.h. Knoten, Linie oder Teilnetz, aus den Knoten (für die Knoten-Steuerungsebene) oder aus der Verkehrsrechnerzentrale (für Linien- bzw. Teilnetz- Steuerungsebene) in die 5G Edge verlagert.

Fig. 5 zeigt eine Prinzipskizze einer 5G-Edge-basierten Knoten- bzw. Teilnetzsteuerung in einer Ausführungsform der Erfindung. Es werden hier dezentrale und zentrale Aufgaben, bzw. die mikroskopische und makroskopische Ebene in einem betrachtet. Die strategische Ebene verbleibt in der Verkehrsrechenzentrale 100.

Die im Mobilfunknetz bestimmten Positions- Bewegungsdaten 501, auch als MNO Daten bezeichnet, und die klassisch erfassten Daten 202 werden an die Edge 400 übermittelt. In der Edge 400 ist die Datenaufbereitung für den Knotenpunkt 401 und ein lokaler Steuerungsalgorithmus 402 ausgeführt. Der lokale Steuerungsalgorithmus 402 ermittelt anhand der Informationen und Vorgaben aus der taktischen / Teilnetzsteuerungsalgorithmik 404 und den aktuell beobachteten Verkehrsflussdaten aus der lokalen Datenaufbereitung 401 ein temporäres Signalprogramm 403 für den jeweiligen Knoten 200. Das temporäre Signalprogramm 403 überschreibt dann für dessen Gültigkeitsdauer das Standardsignalprogramm 300, das durch den Verkehrsrechner 100 vorgegeben ist. Die anderen Elemente entsprechen den Elementen der Steuerungen in den Figuren 2 bis 4.

In einer Ausführungsform der Erfindung kann bei ausreichender Datenlage, der durch das Mobilfunknetz generierten Bewegungsdaten 501, auf die Einbeziehung von klassischer Datenerfassung 202, d.h. Sensoren, Schleifen, usw., verzichtet werden. In dieser Ausführungsform wird ein Kostenvorteil erreicht, da u.a. keine Sensorik mehr in den Asphalt gefräst werden muss.

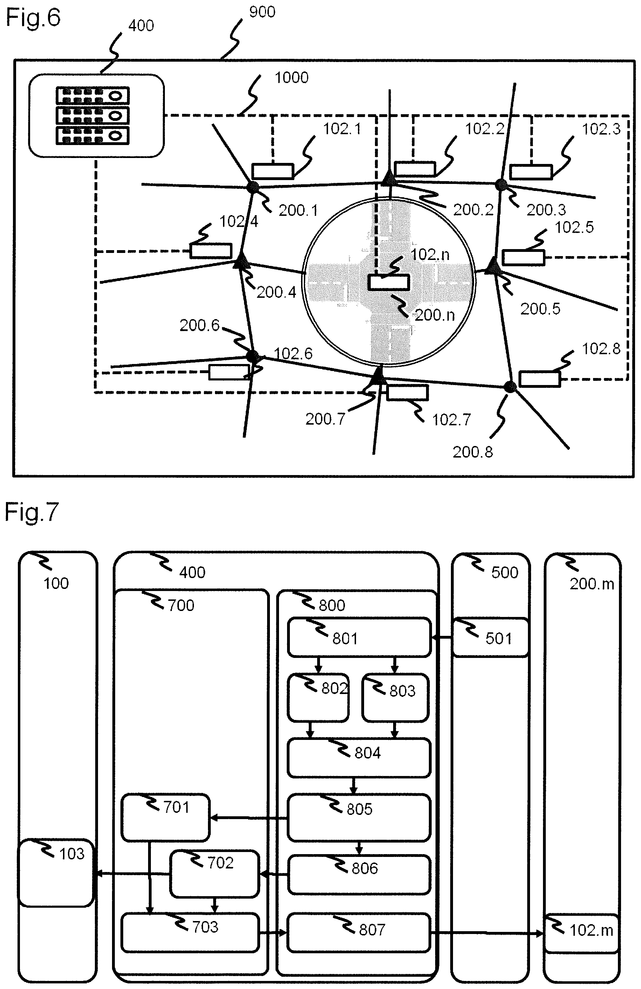

In der nachfolgenden Beschreibung wird die Wirkungsweise verschiedener Ausführungsformen der Erfindung anhand eines Beispiels und Fig. 6 verdeutlicht.

In Figur 6 ist ein Steuerungsmodell innerhalb eines Teilnetzes 900 einer Edge 400 in einer Ausführungsform der Erfindung gezeigt. Die verschiedenen Knoten 200.1 bis 200.n entsprechen dabei Knoten des Verkehrsnetzes. Diese Knoten 200.1. bis 200.n sind jeweils zu Linien verbunden und bilden zusammen ein Teilnetz. Es wird zwischen Nachbarknoten 1. Ordnung, d.h. direkte Nachbarn, welche als Dreieck dargestellt sind, d.h. die Knoten 200.2, 200.4, 200,5 und 200.7, und zwischen Knoten 2. Ordnung, welche als Kreise dargestellt sind unterschieden, d.h. hier die Knoten 200.1, 200.3, 200.6 und 200.8. An jedem Knoten 200.n befindet sich ein LSA Schaltgerät 102.n, welches über eine Mobilfunkverbindung 1000 mit der Edge 400 verbunden ist.

An einem Knotenpunkt 200.n mit signifikantem, in massiven Schüben auftretendem Fußgängerverkehr, beispielsweise an einer ÖPNV Haltestelle, wird über die erfindungsgemäße Erfassung der Mobilfunkendgeräte 501 und einer auf ML basierenden Technologie zur Erkennung von Verkehrsmodalitäten erkannt, ob Bedarf besteht, die Freigabezeit für die Fußgänger zu erhöhen.

In Ausführungsformen der Erfindung fließen in die Berechnungen zur Bedarfserkennung zuvor über längere Zeiträume beobachtete Bewegungsmuster (historische Daten) mit ein und werden gemeinsam mit den aktuellen Beobachtungen unter Einsatz von ML zu einer Prognose verarbeitet. Die Detektion bzw. Prognose eines derartigen Ereignisses führt dann zur Berechnung von Eingabeparametern für die lokal, in der Edge implementierten Steuerungsalgorithmen, die die Signalanpassung selbst ermitteln.

Die angepassten Schaltsignale werden dann aus der Edge 400 entsprechend an die Schaltgeräte 102.n der lokalen Knoten 200.n übermittelt. Eine weitere Berechnung im Knoten selbst ist nicht mehr notwendig. Durch die Echtzeit-Prognosefähigkeit des Systems können Schaltpläne bereits im Vorfeld, also im Zeitpunkt des Entstehens einer potentiellen Flussstörung angepasst und somit der gesamte Fluss optimiert werden.

Es ist ein Vorteil der Erfindung, dass eine frühzeitige Beeinflussung aufgrund der Prognose zu einer geringeren Anzahl und/oder zu einem geringeren Umfang von Signalplananpassungen führt und damit eine größere, globalere Netzauswirkung verhindert wird.

Unter der Annahme, dass eine kurzfristige lokale Anpassung des Signalprogramms den Verkehrsfluss lokal stark beeinflussen kann, die Auswirkungen mit zunehmender Entfernung von diesem Knoten aber schnell abnimmt, wird erfindungsgemäß in der Edge aufgrund der aktuellen Beobachtungen der Bewegungsströme der verschiedenen Verkehrsmodi und dem daraufhin angepassten Signalisierungsplan für die benachbarten Knoten (1. Ordnung, siehe Fig. 6) prognostiziert, ob in den benachbarten Knoten signifikante Störungen durch die Adaption des Knotens zu erwarten sind. Ist dies der Fall, erfolgt auch dort eine Anpassung. Mit anderen Worten, es erfolgt eine Teilnetzsteuerung.

Fig.7 zeigt die Module des Verarbeitungsprozesses und das Zusammenspiel auch mit der strategischen Ebene der LSA Steuerung in der Verkehrszentrale (VZ) 100. Ausgehend von der Verkehrsflussdatenerfassung über Positionsdaten von Smartphones 501 innerhalb des Mobilfunknetzes 500 wird in der Edge 400 in der erfindungsgemäß neuen Modulgruppe 800 zunächst eine Mustererkennung mittels ML Techniken 801 durchgeführt, um einem Modal Split der Verkehrsteilnehmer zu erstellen. Diese Daten werden dann einerseits zu aktuellen Bewegungsdaten 802 verarbeitet und andererseits für eine spätere Verwendung zu historischen Daten 803 verarbeitet und abgespeichert. In dem nächsten Verarbeitungsschritt wird eine Prognose für den lokalen Knoten im Modul 804 ermittelt, die auf den aktuellen Daten 802 und historischen Daten 803 und darauf angewandten ML Techniken basiert. Aus diesen Daten werden im nächsten Verarbeitungsmodul 805 Eingabeparameter für die Steuerungsalgorithmen generiert und an den Knotensignalisierungsalgorithmus 701 übergeben. Der Knotensignalisierungsalgorithmus 701 ist gemeinsam mit dem Teilnetzsignalisierungsalgorithmus 702 erfindungsgemäß als Softwarelösung in die Edge 400 ausgeführt. Die Ergebnisse des Moduls 805 werden parallel im Modul 806 in einer Prognose für die globalen Auswirkungen auf die Nachbarschaftsknoten, vgl. Erläuterungen zu Figur 6, verarbeitet und gehen als Eingabeparameter in die Verarbeitung der Teilnetzsteuerung 702 ein.

Das Teilnetzsteuerungsmodul verfügt im Weiteren über eine Schnittstelle zur strategischen Verkehrssteuerung 103 in der Verkehrszentrale 100, um, wie in den vorangegangenen Abschnitten erläutert, die strategischen Belange des Gesamtnetzes berücksichtigen zu können. Innerhalb der Modulgruppe wird dann ein angepasstes Signalprogramm 703 ermittelt und über das Kommunikationsmodul 807 an die betreffenden Knotenpunktschaltgeräte 102.m in den jeweiligen Knoten 200.m zur Ausführung verteilt.

Gemäß der Erfindung werden schnelle TK-Netze mit integrierten Berechnungskapazitäten mit einem hierarchischen multimodalen innerstädtischen Verkehrsflussmanagement verknüpft, welches lokal ausgelöste Steuerungsaktionen in Beziehung setzt zu einer übergreifenden Verkehrsflussoptimierung.

Ausführungsformen der Erfindung ermöglichen Effizienzgewinne durch Virtualisierung. Die in das TK-Netz integrierten Rechnerkapazitäten ermöglichen es, lokale Steuerungssysteme (Controller) z.B. für eine LSA als eigene Hardware-Instanzen abzuschaffen. Erfindungsgemäß werden stattdessen die ihnen innewohnenden Softwarekomponenten in Datenverarbeitungsressourcen, die in das TK-Netz integriert sind, ausgeführt, vgl. Figur 7 und oben stehenden Erläuterungen hierzu.

So wird von spezifischen Eigenschaften des Controllers, beispielsweise von herstellerdefinierten Schnittstellen, abstrahiert und so ein beträchtlicher technischer und ökonomischer Nutzen durch die Möglichkeit wesentlich leichterer Skalierung realisiert. In der erfindungsgemäßen virtualisierten Realisierung von Steuerungsfunktionen ist zudem eine wesentliche leichtere Wartung gegeben, da Software-Updates ohne Installationsarbeiten vor Ort vorgenommen werden können.

Bisher ist Verkehrsflusssensorik auf den Verkehrsträger "Kraftfahrzeug" ausgerichtet. Erfindungsgemäß werden jedoch alle mobilen Endgeräte, vorzugsweise Smartphones oder ähnliche Geräte, mit immanenten Positionierungsmöglichkeiten zur Verkehrsflussdetektion genutzt. So werden zunächst unterschiedslos die verschiedensten Verkehrsträger berücksichtigt, beispielsweise Fahrradfahrer, Fußgänger, ÖPNV-Nutzer und weitere, sofern diese mobile Endgeräte mit sich führen. Damit ist es erstmals möglich, Durchflussoptimierungen auf Basis der Verkehrsdrücke verschiedenster Verkehrsträger zu realisieren.

In Ausführungsformen der Erfindung erfolgt die Zuordnung einzelner mobiler Endgeräte zu einem Verkehrsträger über Methoden der "Künstlichen Intelligenz", KI, wie etwa Mustererkennung (s.u.). Die Erfassung der Verkehrsflüsse mittels Mobilfunknetzen hebt die starre Bindung an fest installierte Messpunkte, wie sie insbesondere durch Induktionsschleifen aber auch andere Sensorik heutzutage gegeben ist, auf.

In Ausführungsformen der Erfindung können virtuelle Messstellen nahezu beliebig definiert werden, wodurch eine flexible Wahl der Modelle, die zur Verkehrsoptimierung genutzt werden, ermöglicht wird. Hierdurch wird auch ein weiterer technischer Vorteil und eine weitere Kostenersparnis generiert, da auf Baumaßnahmen zur Installation von Sensoren z.B. von Induktionsschleifen in den Asphalt verzichtet werden kann.

Die erfindungsgemäße Nutzung eines 5G-TK-Netz eröffnet hinsichtlich Latenzzeiten, Datensicherheit und Resilienz neue Qualitäten für TK-Netz-basierte Lösungen. Durch die dezentralen Berechnungsoptionen im Netz wird eine neue Effizienz in Datenhaltung und Datenfluss realisiert. Zudem wird die potentielle Fehlerkette verkürzt und so das Ausfallrisiko gesenkt.

Im Hinblick auf die lokale Steuerung einer Verkehrsbeeinflussungsanlage, z.B. einer LSA, bedeutet das, dass erfindungsgemäß aus dem 5G-Netz heraus ein gesicherter Service angeboten werden kann, der quasi instantan auf detektierte Veränderungen der Verkehrssituation reagiert.

Oben wurde bereits beschreiben, welche Effizienzvorteile sich aufseiten der IKT-Realisierung (Informations- und Kommunikationstechnologie) durch Virtualisierung der Steuerungsarchitektur ergeben. In Ausführungsformen der Erfindung wird ein robustes hierarchisches System aus übergreifender Gesamtsystemsteuerung und lokalen Steuerungsaktionen realisiert. Da ein Verkehrsfluss immer ein stochastisches Phänomen ist, muss eine Gesamtsystemsteuerung Schwankungsbreiten bezüglich beschreibender Parameter wie beispielsweise Durchflussdichten oder Fahrzeugfolgeintervallen zulassen. Eine Sensitivitätsanalyse hinsichtlich dieser lokalen Schwankungsbreiten ergibt dann einen Handlungsrahmen für lokale Steuerungsaktionen. Die Gesamtsystemoptimierung erfolgt dann durch einen Regelkreis aus lokal autonom ausgeführten Aktionen, deren Bewertung bzgl. des Gesamtsystems und ggf. Nachsteuerungen auf lokaler Ebene.

Eine erfindungsgemäße Virtualisierung und technische Parameter der 5G-TK-Netze ermöglichen neue Ausführungsformen dieses adaptiven Steuerungsverfahrens. Die technischen Unterscheidungsmerkmale sind teils schon implizit in der obigen Aufzählung enthalten; hier werden sie noch einmal explizit dargelegt:
1. Virtualisierung von lokalen Verkehrs- bzw. LSA-Steuerungsfunktionalitäten in Datenverarbeitungsinstanzen eines TK-Netzes.
2. Virtualisierung der Messwerterfassung durch Ortung im Mobilfunknetz mit der einhergehenden Aufwandsreduzierung für die Installation und Wartung.
3. Automatisierte lokale Verkehrsflussteuerung über Beeinflussung der LSA-Signalprogramme mit Methoden der "Künstlichen Intelligenz", im Gegensatz zu den aktuell zum Einsatz kommenden Methoden, die i.d.R. modellbasiert sind.
4. Aufbau eines Regelkreises aus lokal autonomen Verkehrssteuerungsaktionen und einer übergreifenden Gesamtsystemsteuerung sowie dessen Implementierung in Datenverarbeitungsressourcen, die in das TK-Netz integriert sind
5. Einbeziehung nichtautomobiler Verkehrsflüsse (insb. Fußgängerströme und Fahrradfahrer in eine Gesamtoptimierung über mobile Endgeräte der Telekommunikation

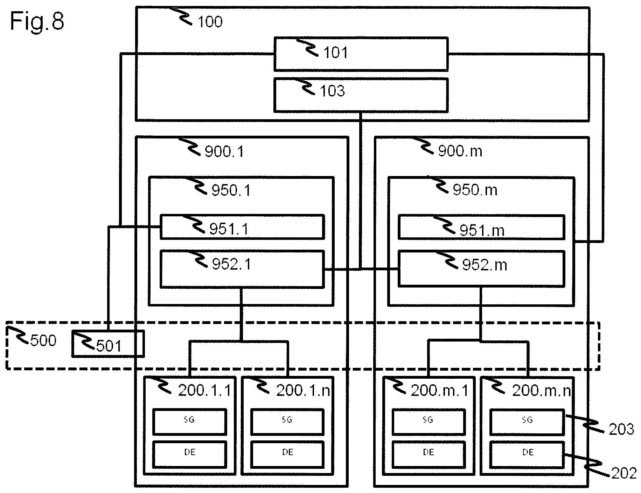

Fig. 8 zeigt eine Prinzipskizze einer Steuerungsarchitektur in einer Ausführungsform der Erfindung. Im Vergleich zum Stand der Technik zeigt die erfindungsgemäße Architekturlösung ebenfalls den Zentralen Verkehrsrechner 100. Dieser verfügt weiterhin über eine Datenaufbereitungsmodul 101, jedoch nicht mehr über ein Modul zur Steuerung der lokalen Konten. Dem Verkehrsrechner obliegt aber weiterhin die globale, strategische Netzsteuerung 103 über das entsprechende Modul.

Das Verkehrsnetz ist in Teilnetze gegliedert 900.1 bis 900.n, die jeweils von einem Edge Controller 950.1 bis 950.m bedient werden. Jeder Edge-Controller steuert dann die dem Teilnetz zugewiesenen lokalen Knoten 200.x.y. Innerhalb jedes Edge Controllers 950.x sind die Module zur Datenverarbeitung 951.x sowie die Knoten- und Teilnetzsteuerung 952.x vorhanden, die die Signalprogramme für die lokalen Knoten 200.x.y ermitteln.

Die Bearbeitungsschritte zur Signalprogrammgenerierung sind im Zusammenhang mit Figur 7 detailliert beschrieben worden. Die Eingangsdaten für die Datenaufbereitung werden durch das Mobilfunknetz 500 und das dort verortete Datenerfassungsmodul 501 bereitgestellt. Zusätzliche Daten können auch aus den lokalen Datenerfassungsmodulen 202 in den jeweiligen Knoten kommen. Dies sind beispielsweise Bedarfsanforderungen über Taster an Fußgängerampeln oder Vorrangschaltungen für den ÖPNV, die lokal erfasst werden.

Innerhalb jedes Knotens gibt es zudem, wie bereits im Zusammenhang mit Figur 1 erläutert, ein Steuergerät 203. Dieses ist im Rahmen dieser Erfindung hier nun als reines Schaltgerät ausgeführt und verfügt über keine eigene Intelligenz zur Verarbeitung von Daten und Generierung oder Anpassung von Signalprogrammen. Die Schaltgeräte 202 führen lediglich die Schaltbefehle aus, die die Edge-basierte Knotensteuerung 952.x bereitstellt.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Literatur und Quellen

[1] Friedrich, B. (2002): Verkehrsadaptive Steuerung von Lichtsignalanlagen - Ein Überblick. (http://ivh.ivs.bau.tu-bs.de/peb/ de/Mitarbeiter/friedrich-Dateien/veroeffentlichungen/Verkehrsadaptive%20Steuerung%20von%20Lichtsignalanlagen. pdf)
[2] FGSV (2010): Richtlinien für Lichtsignalanlagen (RiLSA). Forschungsgesellschaft für Straßen¬ und Verkehrswesen (Hrsg.), FGSV¬ Verlag GmbH, Köln, 2010
[3] BAST (2013): Verkehrsadaptive Netzsteuerung. Berichte der Bundesanstalt für Straßenwesen Heft V 230, 2013.
[4] Wagner, P. (2009): Verfahren und Vorrichtung zur Steuerung einer Signalanlage. Deutsches Patent- und Markenamt, erteiltes Patent DE102009033431B4
[5] Lämmer, S. (2007): Regelentwurf zur dezentralen Online-Steuerung von Lichtsignalanlagen im Straßenverkehrsnetz
[6] Oertel, R.; Ermann, J.; Hesse, T.; Mann, A.; Markowski, R.; Trumpold, J.; Wagner, P. (2017): Steuerung von Lichtsignalanlagen auf Basis von Fahrzeuginformationen - Umsetzung und Feldtests. HEUREKA '17 - Optimierung in Verkehr und Transport (http://elib.dlr.de/105545/1/HEUREKA%2717_VITAL online.pdf)
[7] Kobbeloer, D. (2007): Dezentrale Steuerung von Lichtsignalanlagen in urbanen Verkehrsnetzen. Kasseler Dissertation, Schriftenreihe Verkehr, Heft 18, Juli 2007.
[8] AMONES (2010): Anwendung und Analyse modellbasierter Netzsteuerungsverfahren in städtischen Straßennetzen. Endbericht zum Forschungsprojekt AMONES, 2010.

### Liste der Bezugszeichen

100 zentraler Verkehrsrechner
101 Datenaufarbeitungseinheit
101a Datenaufarbeitung Linie/Netz
101b Datenaufarbeitung Knotenpunkt
102 Knotensteuerungseinheit
102.1 ... n LSA-Schaltgerät 1 bis n
102a Netz-/Liniensteuerung
103 Strategische Verkehrsteuerung
200.1...8 Knoten 1 bis 8
200.m Knoten m
200.1.1...200.1.n Knoten 1.1 bis 1.n
200.m.1...200.m.n. Knoten m.1 bis m.n
201 Steuergerät
201a Signalgruppen
201b Signalsicherung
201c Datenaufarbeitung Knotenpunkt
202 Datenerfassung
203 Schaltgerät ohne Programmfunktion
300 Signalprogramm
400 5G Edge
401 Datenaufbereitung Knotenpunkt
402 Lokaler Steuerungsalgorithmus
403 Temporäres Signalprogramm
404 Taktischer/Teilnetz- Steuerungsalgorithmus
500 MNO
501 Positionsdaten
600 LSA Schaltgerät
600.1...8 LSA Schaltgerät am Knoten 1 bis 8
600.m LSA Schaltgerät am Knoten m
700 bestehende Steuerungsmodule, die in die Edge verlagert wurden
701 Knoten Signalsteuerungsalgorithmus
702 Teilnetz Signalsteuerungsalgorithmus
703 angepasste Schaltsignale
800 neue Steuerungsmodule
801 Machine Learning Mustererkennung
802 aktuelle Bewegungsdaten
803 historische Daten
804 Prognose lokaler Knoten mittels Machine Learning
805 Berechnung der Eingabeparameter für Steuerungsalgorithmus
806 Prognose globale Auswertung
807 Kommunikationsmodul
900 Teilnetz
900.1...m Teilnetz 1 bis m
950.m 5G Edge Controller
951.m Datenbearbeitung
952.m Knoten-/Teilnetzsteuerung
1000 Mobilfunkverbindung

## Patentansprüche

1. Ein Verfahren zur Erfassung von Verkehrsflüssen in einem Verkehrsnetz,
wobei das Verkehrsnetz Knoten, Linien und/oder Teilnetze mit mindestens einer Verkehrslenkungseinrichtung aufweist,
wobei in einem Erfassungsschritt, der in einem Telekommunikationsnetz ausgeführt wird, welches geographisch mit mindestens einem Teil des Verkehrsnetzes überlappt, eine Position und/oder eine Trajektorie mindestens eines Verkehrsteilnehmers an mindestens einem Knoten erfasst wird;
wobei in einem Verkehrsflussbestimmungsschritt, der in einer knotennahen Berechnungseinrichtung des Telekommunikationsnetzes durchgeführt wird, aus den erfassten Positionen und/oder Trajektorien ein Verkehrsfluss bestimmt wird;
wobei in einem lokalen Steuerungsschritt ein lokaler Steuerungsalgorithmus ausgeführt wird und eine Signalanpassung für die mindestens eine Verkehrslenkungseinrichtung an dem Knoten, der Linie und/oder dem Teilnetz des Verkehrsnetzes auf Basis des Verkehrsflussbestimmungsschritt ermittelt wird;
wobei der lokale Steuerungsschritt in der knotennahen Berechnungseinrichtung des Telekommunikationsnetzes durchgeführt wird in der auch der Erfassungsschritt durchgeführt wurde;
wobei in dem Erfassungsschritt, basierend auf der geographischen Position des Knotens,
mindestens ein virtueller Messpunkt bereitgestellt wird, der einem konventionellen Erfassungssystem entspricht, und
wobei der virtuelle Messpunkt konfiguriert ist, Eingangsparameter für den lokalen Steueralgorithmus bereitzustellen, die Eingangsparametern des konventionellen Erfassungssystems entsprechen.

2. Verfahren nach Anspruch 1, wobei in dem Erfassungsschritt Positions- und/oder Bewegungsdaten von Mobilfunkendgeräten in dem Telekommunikationsnetz erfasst und/oder in der knotennahen Berechnungseinrichtung des Telekommunikationsnetzwerks erfasst und verarbeitet werden.

3. Verfahren nach einem der Ansprüche 1 bis 2, wobei in dem Verkehrsflussbestimmungsschritt, basierend auf Machine Learning Techniken, ein Modal Split bestimmt wird, bei dem die erfasste Position und/oder vorzugsweise einer Trajektorie einem bestimmten Typ von Verkehrsteilnehmern zugeordnet wird; und wobei in dem Verkehrsflusserfassungsschritt der Verkehrsfluss basierend auf dem Modal Split bestimmt wird.

4. Verfahren nach einem der Ansprüche 1 bis 3, wobei die dezentral gelegene Berechnungseinrichtung des Telekommunikationsnetzes mit kurzer Rückantwortzeit an die LSA eine Edge Computing Einrichtung des Telekommunikationsnetzwerks ist, vorzugsweise eine 5G Edge Unit des Telekommunikationsnetzwerks ist und/oder wobei die Schritte des Verfahrens in einer network slice des Telekommunikationsnetzwerks durchgeführt werden.

5. Verfahren nach einem der Ansprüche 1 bis 4, wobei die Signalanpassung mindestens einen der folgenden Parameter betrifft: Umlaufzeit, Freigabezeit, Phasenanzahl, Phasenablauf und die Versatzzeit.

6. Verfahren nach einem der Ansprüche 1 bis 5, wobei der lokale Steuerungsalgorithmus mindestens eine der folgenden Optimierungen ausführt: Netzoptimierung, Linienoptimierung oder lokale Knotenoptimierung.

7. Verfahren nach einem der Ansprüche 1 bis 6, wobei in dem Verfahren in mindestens einer zentralen Steuerungseinrichtung ein zentraler Steuerungsschritt durchgeführt wird, in dem mehrere Signalanpassungen aus mehreren lokalen Steuerungsschritten miteinander koordiniert werden.

8. Verfahren nach einem der Ansprüche 1 bis 7, wobei ein dezentraler Steuerungsschritt durchgeführt wird, in dem mehrere Signalanpassungen aus mehreren lokalen Steuerungsschritten miteinander koordiniert werden.

9. Eine Berechnungseinrichtung eines Telekommunikationsnetzes die konfiguriert ist, das Verfahren nach einem der Ansprüche 1 bis 6 durchzuführen.

10. Ein System aus mindestens einer Berechnungseinrichtung aus Anspruch 9 und mindestens einer zentralen Steuerungseinrichtung, welche konfiguriert ist das Verfahren nach Anspruch 7 oder 8 durchzuführen.

11. Ein Mobilfunkendgerät, das konfiguriert ist, seine Positions- und/oder Bewegungsdaten einer Berechnungseinrichtung nach Anspruch 9 zu übermitteln und an dem Verfahren nach einem der Ansprüche 1 bis 8 teilzunehmen.

12. Ein Computerprogrammprodukt, welches mindestens eines der folgenden, eine Berechnungseinrichtung nach Anspruch 9, ein System nach Anspruch 10, oder ein Mobilfunkendgerät nach Anspruch 11 veranlasst, die Schritte des Verfahrens nach einem der Ansprüche 1 bis 8 durchzuführen.

## Claims

1. A method for recording traffic flow in a traffic network,
wherein the traffic network comprises nodes, lines and/or subnetworks with at least one traffic guidance device,
wherein in a recording step carried out in a telecommunication network, which geographically overlaps with at least part of the traffic network, a position and/or a trajectory of at least one road user at at least one node is recorded;
wherein in a traffic flow determination step, which is carried out in a node-proximate calculation device of the telecommunication network, a traffic flow is determined from the detected positions and/or trajectories;
wherein in a local control step a local control algorithm is executed and a signal adjustment for the at least one traffic guidance device at the node, the line and/or the subnetwork of the transport network is determined on the basis of the traffic flow determination step;
wherein the local control step is carried out in the node-proximate calculation device of the telecommunication network in which the recording step was also carried out;
wherein in the recording step at least one virtual measurement point which corresponds to a conventional recording system is provided, based on the geographical position of the node, and
wherein the virtual measuring point is configured to provide input parameters for the local control algorithm which correspond to input parameters of the conventional recording system.

2. The method according to claim 1, wherein in the recording step, position and/or movement data of mobile radio terminals are recorded in the telecommunication network and/or are recorded and processed in the node-proximate calculation device of the telecommunication network.

3. The method according to any one of claims 1 to 2, wherein in the traffic flow determination step, based on machine learning techniques, a modal split is determined in which the recorded position and/or preferably a trajectory is assigned to a specific type of road user; and
wherein in the traffic flow recording step the traffic flow is determined based on the modal split.

4. The method according to any one of claims 1 to 3, wherein the decentrally positioned calculation device of the telecommunication network with short response time to the light signal system LSA is an edge computing means of the telecommunication network, preferably a 5G edge unit of the telecommunication network, and/or wherein the steps of the method are carried out in a network slice of the telecommunication network.

5. The method according to any one of claims 1 to 4, wherein the signal adjustment relates to at least one of the following parameters: circulation time, release time, phase number, phase sequence and offset time.

6. The method according to any one of claims 1 to 5, wherein the local control algorithm carries out at least one of the following optimisations: network optimisation, line optimisation or local node optimisation.

7. The method according to any one of claims 1 to 6, wherein, in the method, a central control step is carried out in at least one central control device, in which a plurality of signal adjustments from a plurality of local control steps are coordinated with each other.

8. The method according to any one of claims 1 to 7, wherein a decentralised control step is carried out in which a plurality of signal adjustments from a plurality of local control steps are coordinated with each other.

9. A calculation device of a telecommunication network which is configured to carry out the method according to any one of claims 1 to 6.

10. A system from at least one calculation device according to claim 9 and at least one central control device configured to carry out the method according to claim 7 or 8.

11. A mobile radio terminal configured to transmit its position and/or movement data to a calculation device according to claim 9 and to participate in the method according to any one of claims 1 to 8.

12. A computer program product which causes at least one of the following: a calculation device according to claim 9, a system according to claim 10 or a mobile radio terminal according to claim 11 to carry out the steps of the method according to any one of claims 1 to 8.

## Revendications

1. Procédé d'enregistrement de flux de trafic dans un réseau routier,
dans lequel le réseau routier présente des nœuds, des lignes et/ou des sous-réseaux avec au moins un dispositif de gestion du trafic,
dans lequel une position et/ou un itinéraire d'au moins un usager de la route sur au moins un nœud sont enregistrés dans une étape d'enregistrement, qui est exécutée dans un réseau de télécommunication, lequel chevauche géographiquement au moins une partie du réseau routier ;
dans lequel un flux de trafic est défini à partir des positions et/ou itinéraires enregistrés dans une étape de définition de flux de trafic, qui est mise en œuvre dans un dispositif de calcul à proximité du nœud du réseau de télécommunication ;
dans lequel un algorithme de commande local est exécuté dans une étape de commande locale et une adaptation de signaux pour l'au moins un dispositif de gestion du trafic est déterminée sur le nœud, la ligne et/ou le sous-réseau du réseau routier sur la base de l'étape de définition de flux de trafic ;
dans lequel l'étape de commande locale est mise en œuvre dans le dispositif de calcul à proximité du nœud du réseau de télécommunication, dans lequel l'étape d'enregistrement a également été mise en œuvre ;
dans lequel au moins un point de mesure virtuel, qui correspond à un système d'enregistrement conventionnel, est fourni dans l'étape d'enregistrement sur la base de la position géographique du nœud, et
dans lequel le point de mesure virtuel est configuré pour fournir des paramètres d'entrée pour l'algorithme de commande local, qui correspondent aux paramètres d'entrée du système d'enregistrement conventionnel.

2. Procédé selon la revendication 1, dans lequel dans l'étape d'enregistrement, des données de position et/ou de déplacement de terminaux de téléphonie mobile dans le réseau de télécommunication sont enregistrées et/ou sont enregistrées et sont traitées dans le dispositif de calcul à proximité du nœud du réseau de télécommunication.

3. Procédé selon l'une quelconque des revendications 1 à 2, dans lequel dans l'étape de définition de flux de trafic, une répartition modale est définie sur la base de techniques d'apprentissage automatique, dans laquelle la position enregistrée et/ou de préférence un itinéraire sont associés à un type défini d'usagers de la route ; et
dans lequel le flux de trafic est défini sur la base de la répartition modale dans l'étape d'enregistrement de flux de trafic.

4. Procédé selon l'une quelconque des revendications 1 à 3, dans lequel le dispositif de calcul placé de manière décentralisée du réseau de télécommunication avec un temps de réponse court aux LSA , installations de signaux lumineux, est un dispositif périphérique du réseau de télécommunication, de préférence est une unité 5G Edge du réseau de télécommunication et/ou dans lequel les étapes du procédé sont mises en œuvre dans une tranche de réseau du réseau de télécommunication.

5. Procédé selon l'une quelconque des revendications 1 à 4,
dans lequel l'adaptation de signaux concerne au moins un des paramètres suivants :
temps de rotation, temps de déclenchement, nombre de phases, ordre des phases et
temps de décalage.

6. Procédé selon l'une quelconque des revendications 1 à 5,
dans lequel l'algorithme de commande local exécute au moins une des optimisations suivantes : optimisation du réseau, optimisation des lignes ou optimisation locale des nœuds.

7. Procédé selon l'une quelconque des revendications 1 à 6, dans lequel dans le procédé, une étape de commande centrale est mise en œuvre, dans laquelle plusieurs adaptations de signaux sont coordonnées entre elles à partir de plusieurs étapes de commande locales, dans au moins un dispositif de commande central.

8. Procédé selon l'une quelconque des revendications 1 à 7,
dans lequel une étape de commande décentralisée est mise en œuvre, dans laquelle plusieurs adaptations de signaux sont coordonnées entre elles à partir de plusieurs étapes de commande locales.

9. Dispositif de calcul d'un réseau de télécommunication, qui est configuré pour mettre en œuvre le procédé selon l'une quelconque des revendications 1 à 6.

10. Système composé d'au moins un dispositif de calcul issu de la revendication 9 et d'au moins un dispositif de commande central, lequel est configuré pour mettre en œuvre le procédé selon la revendication 7 ou 8.

11. Terminal de téléphonie mobile qui est configuré pour transmettre ses données de position et/ou de déplacement à un dispositif de calcul selon la revendication 9 et pour participer au procédé selon l'une quelconque des revendications 1 à 8.

12. Produit de programme d'ordinateur, lequel amène au moins un des éléments suivants, un dispositif de calcul selon la revendication 9, un système selon la revendication 10 ou un terminal de téléphonie mobile selon la revendication 11, à mettre en œuvre les étapes du procédé selon l'une quelconque des revendications 1 à 8.
